(19) Europäisches Patentamt / European Patent Office / Office européen des brevets

(11) **EP 3 776 693 B1**

(12) **EUROPEAN PATENT SPECIFICATION**

(45) Date of publication and mention
of the grant of the patent:
**27.08.2025 Bulletin 2025/35**

(21) Application number: **19784687.6**

(22) Date of filing: **12.04.2019**

(51) International Patent Classification (IPC):
$H01M\ 10/052^{(2010.01)}$    $H01M\ 4/62^{(2006.01)}$
$H01M\ 4/02^{(2006.01)}$    $H01M\ 4/134^{(2010.01)}$
$H01M\ 4/38^{(2006.01)}$

(52) Cooperative Patent Classification (CPC):
**H01M 4/134; H01M 4/38; H01M 4/625;**
**H01M 10/052;** H01M 2004/027; Y02E 60/10

(86) International application number:
**PCT/IB2019/053045**

(87) International publication number:
**WO 2019/198052 (17.10.2019 Gazette 2019/42)**

(54) **ANODE MATERIALS FOR AND METHODS OF MAKING AND USING SAME**

ANODENMATERIALIEN UND VERFAHREN ZUR HERSTELLUNG UND VERWENDUNG DAVON

MATÉRIAUX D'ANODE ET LEURS PROCÉDÉS DE FABRICATION ET D'UTILISATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.04.2018 US 201862656414 P**

(43) Date of publication of application:
**17.02.2021 Bulletin 2021/07**

(73) Proprietor: **Sicona Battery Technologies Pty Ltd**
**North Wollongong, NSW 2500 (AU)**

(72) Inventors:
• **OBROVAC, Mark N.**
**Halifax, Nova Scotia B3H 1N4 (CA)**
• **WANG, Yukun**
**Guangzhou, Guangdong 510006 (CN)**
• **CAO, Simeng**
**Halifax, Nova Scotia B3H 2Z9 (CA)**

(74) Representative: **M. Zardi & Co S.A.**
**Via G. B. Pioda, 6**
**6900 Lugano (CH)**

(56) References cited:
CN-A- 103 747 635    US-A1- 2013 143 119
US-A1- 2015 147 649    US-A1- 2017 098 820
US-B2- 7 871 727    US-B2- 9 373 839
US-B2- 9 527 748

• KIM I ET AL: "SI/TIN NANOCOMPOSITES NOVEL ANODE MATERIALS FOR LI-ION BATTERIES", ELECTROCHEMICAL AND SOLID-STATE LETTERS, IEEE SERVICE CENTER, PISCATAWAY, NJ, US, vol. 3, no. 11, 1 November 2000 (2000-11-01), pages 493 - 496, XP001101364, ISSN: 1099-0062, DOI: 10.1149/1.1391189
• KIM, I-S ET AL.: "Si/TiN nanocomposites: Novel anode materials for Li-ion batteries", ELECTROCHEMICAL AND SOLID STATE LETTERS,, vol. 3, no. 11, 6 September 2000 (2000-09-06), pages 493 - 496, XP001101364
• JESSICA MOONEY: "The Effects Of Microstructure On The Mechanical Properties Of Hard Transition Metal Silicon Nitride Nanocomposite Coatings. (a dissertation)", THE UNIVERSITY OF TEXAS, December 2013 (2013-12-01), Arlington, Texas, USA, pages 7-8,23,32,43,44,55,80, XP055692556

## Description

### FIELD

The present disclosure relates to compositions useful in anodes for electrochemical cells and methods for preparing and using the same.

### BACKGROUND

Various anode compositions have been introduced for use in lithium-ion batteries. Such compositions are described, for example, in Il-seok Kim, P. N. Kumta, and G. E. Blomgren, Electrochem. Solid State Lett., 3 (2000) 493. and Ye Zhang, Zheng-Wen Fu, Qi-Zong Qin, Electrochem. Comm., 6 (2004) 484.

### SUMMARY

In some embodiments, an electrochemically active material is provided.

The electrochemically active material includes an alloy represented by general formula (I):

$$Si_aTi_bO_cN_dM_e, \qquad (I)$$

where a, b, c, d, and e represent atomic % values, $a + b + c + d + e = 100$, M includes carbon or a transition metal element other than titanium, $a > 20$, $a + b + e \geq c + d$, $c \geq 0$, $d > 5$, $e \geq 0$, and $a/b > 0.5$. The alloy includes a transition metal silicide, titanium nitride, or titanium oxynitride phase, and the phase has a Scherrer grain size that is greater than 2 nm and less than 10 nm.

In some embodiments, an electrode composition is provided. The electrode composition includes the above-described electrochemically active material and a binder.

In some embodiments, a negative electrode is provided. The negative electrode includes a current collector and the above-described electrode composition.

In some embodiments, an electrochemical cell is provided. The electrochemical cell includes the above-described negative electrode, a positive electrode comprising a positive electrode composition comprising lithium, and an electrolyte comprising lithium.

In some embodiments, a method of making an electrochemical cell is provided. The method includes providing a positive electrode comprising a positive electrode composition comprising lithium, providing a negative electrode as described above, providing an electrolyte comprising lithium, and incorporating the positive electrode, negative electrode, and the electrolyte into an electrochemical cell.

In some embodiments, a method of making an alloy is provided. The method includes ball milling a powder comprising silicon and titanium. The step of ball milling is carried out in an atmosphere comprising nitrogen, a mixture of nitrogen and oxygen, or air.

The above summary of the present disclosure is not intended to describe each embodiment of the present disclosure. The details of one or more embodiments of the disclosure are also set forth in the description below. Other features, objects, and advantages of the disclosure will be apparent from the description and from the claims.

### BRIEF DESCRIPTION OF THE DRAWINGS

The disclosure may be more completely understood in consideration of the following detailed description of various embodiments of the disclosure in connection with the accompanying figures, in which:

Figure 1 shows X-ray diffraction (XRD) patterns for Examples 1-3 of the present disclosure. Open symbols indicate identified peaks in the diffraction pattern.

Figure 2 is an XRD pattern for Example 5 of the present disclosure. Open symbols indicate identified peaks in the diffraction pattern, and relative diffraction intensities for reference patterns of identified phases are indicated by the black lines and labelled according to the solid symbols.

Figure 3 is an XRD pattern of Comparative Example CE2. Open symbols indicate identified peaks in the diffraction pattern, and relative diffraction intensities for reference patterns of identified phases are indicated by the black lines and labelled according to the solid symbols.

Figure 4 is an XRD pattern of Comparative Example CE4. Open symbols indicate identified peaks in the diffraction pattern, and relative diffraction intensities for reference patterns of identified phases are indicated by the black lines and labelled according to the solid symbols.

Figure 5 shows Scanning Electron Microscopy (SEM) images of illustrative embodiments (a) Example 1, (b) Example 2, and (c) Example 3 of the present disclosure.

Figure 6 shows an SEM image of Comparative Example CE1.

Figure 7 shows the differential capacity as a function of voltage of an electrochemical cell comprising an illustrative alloy of the present disclosure, Example 1, over 50 charge/discharge cycles at 30°C.

Figure 8 shows the differential capacity vs. voltage curve of an electrochemical cell comprising an illustrative alloy of the present disclosure, Example 7, over 50 charge/discharge cycles at 30°C.

Figure 9 shows the differential capacity vs. voltage curve of an electrochemical cell comprising comparative alloy CE1 over 50 charge/discharge cycles at 30°C.

Figure 10 shows the differential capacity vs. voltage curve of an electrochemical cell comprising comparative alloy CE3 over 50 charge/discharge cycles at 30°C.

## DETAILED DESCRIPTION

Silicon based materials are a promising alternative to graphite as anode materials for next generation high energy density lithium-ion electrochemical cells due, at least in part, to their higher energy density. However, it has been difficult to obtain strong electrochemical cell life with known silicon-based negative electrode materials because of their high volume expansion during lithiation and propensity to undesirably react with the electrolyte in the cell.

Silicon-based alloys that include an inactive component have proven successful in providing extended cycle life by lowering volume expansion and reducing electrolyte reactivity. However, further improvement in these areas remains desirable.

Silicon(Si)-based alloys that include titanium nitride (TiN) as an inactive component or phase (Si/TiN active/inactive alloys) possess the desirable properties of high electronic conductivity and low electrolyte reactivity. Known Si/TiN active/inactive alloys for lithium-ion electrochemical cells have been made by mechanical alloying Si and TiN phases. Such mechanical alloying (i.e., milling Si and TiN directly) has been discovered to result in the formation of Si/TiN active/inactive alloys with Scherrer grain sizes of the TiN phase that are no less than 5 nanometers when the Si/Ti atomic ratio is low (e.g, 33/66), and Scherrer grain sizes of the TiN phase that are no less than 10 nanometers when the Si/Ti atomic ratio is high (e.g., 85/15). Smaller grain sizes are desirable in order to improve electrochemical performance. In addition, using TiN as a starting material is relatively costly, since TiN is generally typically made from gas-phase processing.

It has been reported that nanocrystalline TiN can be produced by milling of titanium (Ti) powders in a nitrogen rich atmosphere. However, it has also been reported that ball milling Si under a nitrogen rich atmosphere will result in the formation of silicon nitride ($Si_3N_4$), a material that is electrochemically inactive in lithium-ion electrochemical cells. Consequently, prior to the present discovery, it had been believed that mechanical alloying of a mixture of Si and Ti powders in a nitrogen rich atmosphere would result in the formation of a mixture of TiN and $Si_3N_4$, both of which are electrochemically inactive in lithium-ion electrochemical cells. However, it has been discovered that such alloying can produce silicon-titanium-nitrogen alloys that do not include an appreciable amount of $Si_3N_4$ and possess a unique microstructure that renders them particularly beneficial for their use as negative electrode materials in lithium-ion electrochemical ion cells. Additionally, the synthesis methods of the present disclosure were discovered to be amenable to relatively low-cost, large-scale production.

As used herein,

the terms "lithiate" and "lithiation" refer to a process for adding lithium to an electrode material or electrochemically active phase;

the terms "delithiate" and "delithiation" refer to a process for removing lithium from an electrode material or electrochemically active phase;

the terms "charge" and "charging" refer to a process for providing electrochemical energy to a cell;

the terms "discharge" and "discharging" refer to a process for removing electrochemical energy from a cell, e.g., when using the cell to perform desired work;

the phrase "charge/discharge cycle" refers to a cycle wherein an electrochemical cell is fully charged, i.e. the cell attains its upper cutoff voltage and the cathode is at about 100% state of charge, and is subsequently discharged to attain a lower cutoff voltage and the cathode is at about 100% depth of discharge;

the phrase "half-cell" refers to a two electrode electrochemical cell where one electrode is the working electrode and the other electrode is a lithium metal counter/reference electrode;

the phrase "positive electrode" refers to an electrode (often called a cathode) where electrochemical reduction and lithiation occurs during a discharging process in a full cell;

the phrase "negative electrode" refers to an electrode (often called an anode) where electrochemical oxidation and delithiation occurs during a discharging process in a full cell;

the phrase "full cell" refers to a two electrode electrochemical cell where neither of the electrodes are lithium metal (e.g., a lithium ion battery);

the term "alloy" refers to a substance that includes a mixture of any or all of metals, metalloids, semimetals, or semiconductors;

the phrase "electrochemically active material" refers to a material, which can include a single phase or a plurality of phases, that can electrochemically react or alloy with lithium under conditions possibly encountered during charging and discharging at the negative electrode in a lithium ion battery (e.g., voltages between 0 V and 2 V versus lithium metal);

the phrase "electrochemically inactive material" refers to a material, which can include a single phase or a plurality of phases, that does not electrochemically react or alloy with lithium under conditions possibly encountered during charging and discharging at the negative electrode in a lithium ion battery (e.g., voltages between 0 V and 2 V versus lithium metal);

the term "phase" refers to a region of a material having uniform composition and atomic structure;

the term "amorphous phase" refers to a phase whose average grain size is less than 2 nanometers as determined by application of the Scherrer equation to the full width at half maximum (FWHM) of any one of its diffraction peaks between 20° and 60° 2-theta under incident Cu-K$\alpha_1$ radiation;

the phrases "electrochemically active phase" or "active phase" refer to a phase of an electrochemically active material that can electrochemically react or alloy with lithium under conditions possibly encountered during charging and discharging at the negative electrode in a lithium ion battery (e.g., voltages between 0 V and 2 V versus lithium metal);

the phrases "electrochemically inactive phase" or "inactive phase" refer to phases of an electrochemically active material that does not electrochemically react or alloy with lithium under conditions possibly encountered during charging and discharging at the negative electrode in a lithium ion battery (e.g., voltages between 0 V and 2 V versus lithium metal);

the phrase "Scherrer grain size" of a phase of refers to the average grain size of the phase as determined by application of the Scherrer equation to the FWHM of any one of its diffraction peaks between 20° and 60° 2-theta under incident Cu-K$\alpha$1 radiation;

the phrase "substantially homogeneous" refers to a material in which the components or domains of the material are sufficiently mixed with one another such that the physical properties of one portion of the material is the same as that of any other portion of the material on a length scale of 100 nanometers or more;

As used herein, the singular forms "a", "an", and "the" include plural referents unless the content clearly dictates otherwise. As used in this specification and the appended embodiments, the term "or" is generally employed in its sense including "and/or" unless the content clearly dictates otherwise.

As used herein, the recitation of numerical ranges by endpoints includes all numbers subsumed within that range (e.g. 1 to 5 includes 1, 1.5, 2, 2.75, 3, 3.8, 4, and 5).

Unless otherwise indicated, all numbers expressing quantities or ingredients, measurement of properties and so forth used in the specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

In some embodiments, the present disclosure relates to an electrochemically active material for use in an electrochemical cell (e.g., a lithium ion battery). For example, the electrochemically active material may be incorporated into a negative electrode for a lithium ion battery.

In some embodiments, the electrochemically active materials of the present disclosure may include or take the form of a silicon/titanium nitride alloy. In some embodiments, additional elements may be incorporated into the silicon/titanium nitride alloys to, for example, aid in processing or enhance electrochemical performance. Suitable additional elements may include carbon or transition metals. In some embodiments, suitable transition metals may include first row transition metals. In some embodiments, suitable first row transition metal elements may include iron, cobalt, nickel, or manganese. In some embodiments, oxygen may be incorporated into the silicon/titanium nitride alloy.

In some embodiments, the electrochemically active materials of the present disclosure may include or take the form of a silicon/titanium nitride alloy having the following general formula:

$$Si_aTi_bO_cN_dM_e,$$

where a, b, c, d, and e represent atomic % values, a + b + c + d + e = 100, and M includes or consists of any one or combination of carbon or a transition metal element other than titanium. In some embodiments, a is greater than 40, or greater than 70; a is between 40 and 75, or between 50 and 75; b is greater than (c + d), or (a+b+e) is greater than or equal to (c + d); c is greater than or equal to 0, greater than 5, or greater than 10; c is between 1 and 10, between 10 and 15, or between 15 and 20; d is greater than 5, greater than 20, or greater than 40; d is between 5 and 20, between 20 and 35, or between 35 and 45; e is greater than or equal to 0, greater than 5, or greater than 10; or e is between 1 and 5, between 5 and 10, or between 10 and 20. In some embodiments, a/b is greater than 0.5, greater than 1, greater than 2, greater than 3, or greater than 5. In some embodiments, M includes or consists of any one or combination of V, Cr, Mn, Fe, Co, Ni or Cu. In some embodiments, M includes or consists of a combination of one or more transition metal elements other than titanium and carbon. In some, M includes Fe.

In some embodiments, the silicon/titanium nitride alloy may include a transition metal silicide phase.

In some embodiments, the silicon/titanium nitride alloys may include a phase (e.g., a titanium nitride phase or a titanium oxynitride phase) having a Scherrer grain size of less than 10 nanometers, less than 8 nanometers, or less than 6 nanometers; or between 2 and 10 nanometers, between 2 and 8 nanometers, between 2 and 6 nanometers.

In some embodiments, the silicon/titanium nitride alloys may include a phase having x-ray diffraction (XRD) peaks characteristic of a titanium nitride phase or titanium nitride-like phase in which the largest XRD peak associated with this phase has a full width at half maximum (FWHM), as measured using Cu-k$\alpha_1$ radiation greater than 0.9° 2-theta and less than 4° 2-theta; or greater than 0.9° 2-theta and less than 2° 2-theta.

In some embodiments, the silicon/titanium nitride alloys may include an elemental silicon phase having a Scherrer grain size that is less than or equal to 60 nanometers, less than 20 nanometers, or less than 5 nanometers; or between 2 and 10 nanometers, between 10 and 20 nanometers, or between 20 and 60 nanometers. In some embodiments, the silicon/titanium nitride alloys may alternatively or additionally include an amorphous elemental silicon phase, having no detectible Cu-K$\alpha_1$ x-ray powder diffraction peaks that correspond to a grain size greater than 2 nm, according to the Scherrer equation.

In some embodiments, each of the phases of the electrochemically active material (e.g., active phases, inactive phases, or any other phases of the active material) may include or be in the form of one or more grains. In some embodiments, the x-ray diffraction pattern of the electrochemically active material contains no detectible Cu-K$\alpha_1$ x-ray powder diffraction peaks whose FWHM correspond to a grain size greater than 10 nm, greater than 20 nm, or greater than 60 nm, according to the Scherrer equation.

The total delithiation capacity of the alloys of the present disclosure may be measured in a half-cell between 0.38 V to 0.48 V and be divided by the total delithiation capacity of the alloys between 5 mV and 0.9 V to determine the fraction of $Li_{15}Si_4$ formed during cycling compared to the total amount of active silicon. This fraction is referred to in the present application as 'r'. The maximum value of r that is reached during cycling is referred to as $r_{max}$. $r_{max}$ was used as a measure of the alloy structural stability during cycling. Smaller $r_{max}$ values are indicative of improved alloy structural stability and improved cycling performance. $r_{max,30}$ is the value of $r_{max}$ measured during the first 50 charge/discharge cycles performed in a half-cell at 30°C with a C/10 cycling rate for the first two cycles and a C/5 rate for the following cycles with a C/20 trickle discharge (lithiation) step at the lower cutoff voltage. $r_{max,45}$ is the value of $r_{max}$ measured during the first 20 charge/-discharge cycles performed in a half-cell at 45°C with a C/10 cycling rate for the first two cycles and a C/5 rate for the following cycles with a C/20 trickle discharge (lithiation) step at the lower cutoff voltage. In some embodiments, the silicon/titanium nitride alloys may exhibit an $r_{max,30}$ of less than 0.25, less than 0.23, or less than 0.21. In some embodiments, the silicon/titanium nitride alloys may exhibit an $r_{max,45}$ of less than 0.25, less than 0.23, or less than 0.21.

In some embodiments, the active phases of the silicon/titanium nitride alloys may account for at least 30 vol. % or at least 40 vol. % of the active material based on the total volume of the active material; or between 30 vol. % and 70 vol. %, between 40 vol. % and 60 vol. %, between 40 vol. % and 55 vol. %,, between 40 vol. % and 42 vol. %, or between 50 vol. % and 52 vol. %, based on the total volume of the active material. In some embodiments, inactive phase of the silicon/titanium nitride alloys may account for between 30 vol. % and 70 vol. %, between 40 vol. % and 60 vol. %, or between 40 vol. % and 55 vol. % of the active material, based on the total volume of the active material.

In some embodiments, the silicon/titanium nitride alloys may be represented by one or more of the following formulas: $Si_{74}Ti_{13}N_{13}$, $Si_{74}Ti_{13}O_7N_6$, $Si_{54}Ti_{23}N_{23}$, $Si_{54}Ti_{23}O_7N_{16}$, $Si_{42}Ti_{29}N_{29}$, $Si_{42}Ti_{29}O_7N_{22}$, $Si_{77}Ti_9N_9C_5$, $Si_{77}Ti_9O_7N_2C_5$, $Si_{77}Ti_9N_9Fe_5$, $Si_{77}Ti_9O_7N_2Fe_5$, $Si_{77}Ti_9N_9C_3Fe_2$, $Si_{77}Ti_9O_7N_2C_3Fe_2$, $Si_{74}Ti_{16}N_{10}$. $Si_{74}Ti_{16}O_7N_3$, $Si_{42}Ti_8N_{33}O_{16}$, , or combinations thereof.

In some embodiments, the silicon/titanium nitride alloys may take the form of particles. The particles may have a diameter (or length of longest dimension) that is no greater than 60 $\mu$m, no greater than 40 $\mu$m, no greater than 20 $\mu$m, no greater than 10 $\mu$m, no greater than 7 $\mu$m, or even smaller; at least 0.5 $\mu$m, at least 1 $\mu$m, at least 2 $\mu$m, at least 5 $\mu$m, or at least 10 $\mu$m or even larger; or 0.5 to 10 $\mu$m, 1 to 10 $\mu$m, 2 to 10 $\mu$m, 40 to 60 $\mu$m, 1 to 40 $\mu$m, 2 to 40 $\mu$m, 10 to 40 $\mu$m, 5 to 20 $\mu$m, 10 to 20 $\mu$m, 1 to 30 $\mu$m, 1 to 20 $\mu$m, 1 to 10 $\mu$m, 0.5 to 30 $\mu$m, 0.5 to 20 $\mu$m, or 0.5 to 10 $\mu$m.

In some embodiments, the silicon/titanium nitride alloys may take the form of particles having low surface area. The particles may have a surface area that is less than 20 $m^2$/g, less than 12 $m^2$/g, less than 10 $m^2$/g, less than 5 $m^2$/g, less than 4 $m^2$/g, or even less than 2 $m^2$/g.

In some embodiments, the silicon/titanium nitride alloys may take the form of particles having a flake morphology.

As used herein, the term "flake morphology" refers to a flat thin particle, which has a 3rd-dimension size that is at least half the size of the other two dimensions.

In some embodiments, the particles of the electrochemically active material may take the form of a powder. As used herein, the term "powder" refers to a collection of particles where each particle is less than 100 μm in any extent.

In some embodiments, the phases of the silicon/titanium nitride alloys can be distributed substantially homogeneously throughout the alloy material, including the surface and bulk of the alloy material.

In some embodiments, the active material (e.g., in the form of alloy particles) may bear on an exterior surface thereof a coating that at least partially surrounds the active material. By "at least partially surrounds" it is meant that there is a common boundary between the coating and the exterior of the active material. The coating can function as a chemically protective layer and can stabilize, physically and/or chemically, the components of the active material. Exemplary materials useful for coatings include carbons, such as amorphous carbon or graphitic carbon, LiPON glass, phosphates such as lithium phosphate ($Li_2PO_3$), lithium metaphosphate ($LiPO_3$), lithium dithionate ($LiS_2O_4$), lithium fluoride (LiF), lithium metasilicate ($LiSiO_3$), and lithium orthosilicate ($Li_2SiO_4$). The coating can be applied by milling, solution deposition, vapor phase processes, thermal decomposition, or other processes known to those of ordinary skill in the art.

In some embodiments, electrochemically active material or alloys of the present disclosure may exhibit a reversible gravimetric capacity greater than 600 mAh/g, greater than 1000 mAh/g, or greater than 2000 mAh/g; and a reversible volumetric capacity greater than 1000 Ah/L, greater than 1500 Ah/L, or greater than 2000 Ah/L.

In some embodiments, the present disclosure is further directed to negative electrode compositions for use in lithium-ion batteries. The negative electrode compositions may include the above-described electrochemically active materials. Additionally, the negative electrode compositions may include one or more additives such as binders, conductive diluents, fillers, adhesion promoters, thickening agents for coating viscosity modification such as carboxymethylcellulose, polyacrylic acid, polyvinylidene fluoride, lithium polyacrylate, carbon black, or other additives known by those skilled in the art.

In illustrative embodiments, the negative electrode compositions may include an electrically conductive diluent to facilitate electron transfer from the composition to a current collector. Electrically conductive diluents include, for example, carbons, powdered metal, metal nitrides, metal carbides, metal silicides, and metal borides, or combinations thereof. Representative electrically conductive carbon diluents include carbon blacks such as Super C65 carbon black (Imerys Graphite and Carbon Ltd., Switzerland), Ketjenblack (AkzoNobel, the Netherlands), Shawinigan Black (Chevron Chemical Co., Houston, Tex.), acetylene black, furnace black, lamp black, graphite, carbon fibers, carbon nanotubes, and combinations thereof. In some embodiments, the amount of conductive diluent in the electrode composition may be at least 2 wt. %, at least 6 wt. %, or at least 8 wt. %, or at least 20 wt. % based upon the total weight of the electrode coating; less than 5 wt. less than 2 wt. %, or less than 1 wt. % based upon the total weight of the electrode composition, or between 0.2 wt. % and 80 wt. %, between 0.5 wt. % and 50 wt. %, between 0.5 wt. % and 20 wt. %, or between 1 wt. % and 10 wt. %, based upon the total weight of the electrode composition.

In some embodiments, the negative electrode compositions may include graphite to improve the density and cycling performance, especially in calendered coatings, as described in U.S. Patent Application Publication 2008/0206641 by Christensen et al. . The graphite may be present in the negative electrode composition in an amount of greater than 10 wt. %, greater than 20 wt. %, greater than 50 wt. %, greater than 70 wt. % or even greater, based upon the total weight of the negative electrode composition; or between 20 wt. % and 90 wt. %, between 30 wt. % and 80 wt. %, between 40 wt. % and 60 wt. %, between 45 wt. % and 55 wt.%, between 80 wt. % and 90 wt. %, or between 85 wt. % and 90 wt. %, based upon the total weight of the electrode composition.

In some embodiments, the negative electrode compositions may also include a binder. Suitable binders include oxo-acids and their salts, such as sodium carboxymethylcellulose, polyacrylic acid, lithium polyacrylate, sodium polyacrylate, methyl acrylate/acrylic acid copolymers, lithium methyl acrylate/acrylate copolymers, and other optionally lithium or sodium neutralized polyacrylic acid copolymers. Other suitable binders include polyolefins such as those prepared from ethylene, propylene, or butylene monomers; fluorinated polyolefins such as those prepared from vinylidene fluoride monomers; perfluorinated polyolefins such as those prepared from hexafluoropropylene monomer; perfluorinated poly(alkyl vinyl ethers); perfluorinated poly(alkoxy vinyl ethers); or combinations thereof. Other suitable binders include polyimides such as the aromatic, aliphatic or cycloaliphatic polyimides and polyacrylates. Other suitable binders include phenolic resins. The binder may be crosslinked. In some embodiments, the amount of binder in the electrode composition may be at least 3 wt. %, at least 5 wt. %, at least 10 wt. %, or at least 20 wt. % based upon the total weight of the electrode coating; less than 30 wt. %, less than 20 wt. %, or less than 10 wt. %, based upon the total weight of the electrode composition; or between 3 wt. % and 30 wt. %, between 3 wt. % and 20 wt. %, or between 3 wt. % and 10 wt. %, based upon the total weight of the electrode composition.

In some embodiments, the present disclosure is further directed to negative electrodes for use in lithium ion electrochemical cells. The negative electrodes may include a current collector having disposed thereon the above-described negative electrode composition. The current collector may be formed of a conductive material such as a metal (e.g., copper, aluminum, nickel), or a carbon composite.

In some embodiments, the present disclosure further relates to lithium ion electrochemical cells. In addition to the above-described negative electrodes, the electrochemical cells may include a positive electrode, an electrolyte, and a separator. In the cell, the electrolyte may be in contact with both the positive electrode and the negative electrode, and the positive electrode and the negative electrode are not in physical contact with each other; typically, they are separated by a polymeric separator film sandwiched between the electrodes.

In some embodiments, the positive electrode may include a current collector having disposed thereon a positive electrode composition that includes a lithium transition metal oxide intercalation compound such as $LiCoO_2$, $Li-CO_{0.2}Ni_{0.8}O_2$, $LiMn_2O_4$, $LiFePO_4$, $LiNiO_2$, or lithium mixed metal oxides of manganese, nickel, and cobalt in any proportion. Blends of these materials can also be used in positive electrode compositions. Other exemplary cathode materials are disclosed in U.S. Patent No. 6,680,145 (Obrovac et al.) and include transition metal grains in combination with lithium-containing grains. Suitable transition metal grains include, for example, iron, cobalt, chromium, nickel, vanadium, manganese, copper, zinc, zirconium, molybdenum, niobium, or combinations thereof with a grain size no greater than about 50 nanometers.

In various embodiments, useful electrolyte compositions may be in the form of a liquid, solid, or gel. The electrolyte compositions may include a salt and a solvent (or charge-carrying medium). Examples of solid electrolyte solvents include polymers such as polyethylene oxide, polytetrafluoroethylene, fluorine-containing copolymers, and combinations thereof. Examples of liquid electrolyte solvents include ethylene carbonate (EC), diethyl carbonate (DEC), dimethyl carbonate (DMC), ethyl methyl carbonate (EMC), propylene carbonate, fluoroethylene carbonate (FEC), tetrahydrofuran (THF), acetonitrile, and combinations thereof. In some embodiments the electrolyte solvent may comprise glymes, including monoglyme, diglyme and higher glymes, such as tetraglyme Examples of suitable lithium electrolyte salts include $LiPF_6$, $LiBF_4$, $LiClO_4$, lithium bis(oxalato)borate, $LiN(CF_3SO_2)_2$, $LiN(C_2F_5SO_2)_2$, $LiAsF_6$, $LiC(CF_3SO_2)_3$, and combinations thereof.

In some embodiments, the lithium ion electrochemical cells may further include a microporous separator, such as a microporous material available from Celgard LLC, Charlotte, N.C. The separator may be incorporated into the cell and used to prevent the contact of the negative electrode directly with the positive electrode.

The disclosed lithium ion electrochemical cells can be used in a variety of devices including, without limitation, portable computers, tablet displays, personal digital assistants, mobile telephones, motorized devices (e.g., personal or household appliances and vehicles), instruments, illumination devices (e.g., flashlights) and heating devices. One or more lithium ion electrochemical cells of this disclosure can be combined to provide a battery pack.

METHOD OF MAKING

The present disclosure further relates to methods of making the above-described electrochemically active materials. In some embodiments, the materials can be made by methods known to produce films, ribbons or particles of metals or alloys including cold rolling, arc melting, resistance heating, ball milling, sputtering, chemical vapor deposition, thermal evaporation, atomization, induction heating or melt spinning. The above described active materials may also be made via the reduction of metal oxides or sulfides.

In some embodiments, the methods of making the above-described electrochemically active materials may include milling (e.g., balling milling) mixtures of silicon and titanium powders, silicon-titanium alloys, intermetallic silicon-titanium compounds (e.g., $TiSi_2$), or combinations thereof, in a nitrogen rich atmosphere. As used herein, a "nitrogen rich" atmosphere refers to an atmosphere that includes at least 99 atomic % nitrogen. Alternatively, the powders may be milled in an atmosphere of air, or a mixture of nitrogen and oxygen gases. As discussed above, such methods, surprisingly produce silicon-titanium-nitrogen alloys (without appreciable $Si_3N_4$ phases) having nanocrystalline morphology. **In** some embodiments, the methods include incorporating additional elements into the alloys, such as by adding them as powders during the milling process. **In** some embodiments, the methods may further include incorporating oxygen into the alloys allowing oxygen gas to enter the mill in addition to nitrogen gas (e.g., by milling in an atmosphere of air instead of nitrogen rich atmosphere).

The present disclosure further relates to methods of making negative electrodes that include the above-described negative electrode compositions. **In** some embodiments, the method may include mixing the above-described electrochemically active materials, along with any additives such as binders, conductive diluents, fillers, adhesion promoters, thickening agents for coating viscosity modification and other additives known by those skilled in the art, in a suitable coating solvent such as water or N-methylpyrrolidinone to form a coating dispersion or coating mixture. The dispersion may be mixed thoroughly and then applied to a foil current collector by any appropriate coating technique such as knife coating, notched bar coating, dip coating, spray coating, electrospray coating, or gravure coating. The current collectors may be thin foils of conductive metals such as, for example, copper, stainless steel, or nickel foil. The slurry may be coated onto the current collector foil and then allowed to dry in air or vacuum, and optionally by drying in a heated oven, typically at about 80° to about 300°C for about an hour to remove the solvent.

The present disclosure further relates to methods of making lithium ion electrochemical cells. In various embodiments, the method may include providing a negative electrode as described above, providing a positive electrode that includes lithium, and incorporating the negative electrode and the positive electrode into an electrochemical cell comprising a lithium-containing electrolyte.

The operation of the present disclosure will be further described with regard to the following detailed examples. These examples are offered to further illustrate various specific embodiments and techniques. It should be understood, however, that many variations and modifications may be made while remaining within the scope of the present disclosure.

## EXAMPLES

Objects and advantages of this disclosure are further illustrated by the following comparative and illustrative examples. Unless otherwise noted, all parts, percentages, ratios, etc. in the examples and the rest of the specification are by weight, and all reagents used in the examples were obtained, or are available, from general chemical suppliers such as, for example, Sigma-Aldrich, Saint Louis, MO, US or Alfa Aesar, Haverhill, MA, US. The following abbreviations are used herein: mL = milliliters, min = minutes, hr = hours, g = grams, mm = millimeters, °C = degrees Celsius, at% = atomic percentage, kV = kilovolts.

### Sample Preparation and Test Methods

#### Ball Milling

Si-Ti-N alloy powders for Examples 1-9 and Comparative Examples CE1-CE4 were prepared by ball milling Si and Ti powders in the atomic ratios and conditions provided in Table 1. Alloys were prepared by ball milling in a SPEX 8000D dual high-energy ball mixer/mill (Model 8000-D, available from SPEX Sample Prep, Metuchen, NJ, US) in a 65 mL hardened steel vial. Powder precursors used during milling were: titanium powder (-325 mesh, 99% metals basis from Alfa Aesar), silicon powder (-325 mesh, 99% metals basis from Sigma-Aldrich), iron powder (-325 mesh, 99% from Sigma-Aldrich,), graphite powder (SFG6L, Imerys Graphite and Carbon, Quebec, Canada), TiN powder (99.7%, Alfa Aesar) and $TiSi_2$ powder (99.5%, Alfa Aesar). The amounts of the powder precursors used for each example and Comparative Example are provided in Table 1. A 0.5 mL total volume of reactant powder (based on the total bulk density) along with 180 g of 1/16-inch (1.6 mm) stainless steel balls were placed in the ball mill vial. Alloys to be milled under argon were loaded and sealed in an argon-filled glovebox prior to milling. Samples to be milled under an atmosphere other than Ar were loaded into milling vials that had their O-ring seals removed. This allowed gas to enter or leave the mill during the milling process. Such vials are termed "unsealed vials." Samples to be milled in a $N_2$ atmosphere were placed in unsealed vials and transferred to a $N_2$-filled glovebox. Milling proceeded using the SPEX mill located inside the glovebox. Samples to be milled in air were placed in unsealed vials and milled using SPEX mills operating in the open air.

**Table 1.** Synthesis conditions for Si-Ti-N alloys

| Ex. | Precursor (atomic %) | Milling Gas | HTT* (°C) | Ball Milling Time (hr) |
|---|---|---|---|---|
| 1 | 85 Si + 15 Ti | $N_2$ | NA | 16 |
| 2 | 70 Si + 30 Ti | $N_2$ | NA | 16 |
| 3 | 60 Si + 40 Ti | $N_2$ | NA | 16 |
| 4 | 85 Si + 10 Ti + 5 C | $N_2$ | NA | 4 |
| 5 | 85 Si + 10 Ti + 5 Fe | $N_2$ | NA | 4 |
| 6 | 85 Si + 15 Ti | Air | NA | 8 |
| 7 | 100 $TiSi_2$ | $N_2$ | NA | 16 |
| 8 | 75 $TiSi_2$ + 25 Ti | $N_2$ | NA | 16 |
| 9 | 70 Si + 30 Ti | $N_2$ | 800 | 16 |
| CE 1 | 85 Si + 15 TiN | Ar | NA | 16 |
| CE 2 | 70 Si + 30 TiN | Ar | NA | 16 |
| CE 3 | 85 Si + 15 TiN | Ar | 800 | 16 |
| CE 4 | 70 Si + 30 TiN | Ar | 800 | 16 |
| *HTT = post milling heat treatment temperature* | | | | |

*Nitrogen and Oxygen Content Analysis*

Nitrogen and oxygen content were determined by LECO combustion analysis of about 50 mg of samples accurately weighed in oxygen-free tin capsules using a LECO TC436DR Oxygen/Nitrogen/Hydrogen Elemental Analyzer (LECO Corporation, Saint Joseph, MI, US).

*X-ray Diffraction*

X-ray diffraction (XRD) patterns were collected using an ULTIMA IV diffractometer equipped with a Cu K$\alpha$ X-ray source, a diffracted beam monochromator and a scintillation detector (available from Rigaku Americas Corporation, The Woodlands, TX, US.) XRD patterns were measured using an X-ray tube voltage and current of 45 kV and 40 mA, respectively. Measurements were taken in 0.05° steps with a count time of 3 seconds per step.

Grain sizes of individual phases were determined by application of the Scherrer equation to the FWHM of the most intense peak of that phase in the XRD pattern.

*Scanning Electron Microscopy*

Scanning electron microscope (SEM) images were collected using a Phenom G2-pro SEM (Nanoscience Instruments, Phoenix, Arizona, US). Flake content was determined from SEM images at 5000× magnification of the powdered samples mounted on carbon tape, in which images of at least 200 sample particles were present. The flake content was taken as the percent area in the SEM images occupied by flakes compared to the total area in the image occupied by all the sample particles. The average flake extent was determined as the maximum flake dimension averaged over all flakes in the SEM images.

*Sample Density Measurement*

True sample densities were measured using an ACCUPYC II 1340 gas displacement helium pycnometer (Micromeritics, Norcross, GA, US).

*Surface Area Measurement*

Specific surface areas were measured using a FlowSorb II 2300 surface area analyzer (Micromeritics, Norcross, GA, US) with a single-point Brunauer-Emmett-Teller (BET) nitrogen absorption method. Prior to BET surface area measurement, powders were placed in a glass holder and degassed under vacuum at 160°C for at least half an hour.

*Electrode Preparation*

Electrode slurries were made by mixing alloy powders, carbon black (Super C65, Imerys Graphite & Carbon, Quebec, Canada) and a 10% by weight aqueous solution of lithium polyacrylate (LiPAA). The LiPAA had been made by neutralizing a polyacrylic acid solution (Sigma-Aldrich, average molecular weight ~250,000 g/mol, 35 wt% in $H_2O$) with $LiOH \cdot H_2O$ (Sigma Aldrich, 98% in distilled water) with a volumetric ratio of 70/5/25 in distilled water. The mixing was conducted in a planetary ball mill (RETSCH PM200) with 3 WC balls (15:1 ball/sample weight ratio) at 100 rpm for a period of 1 hr. The slurries were coated on electrolytic Cu foil (Furukawa Electric, Japan) using a 0.004-inch (0.10 mm) gap coating bar and dried at 120 °C in air for 1 hr. Typical active material loadings were about 3.0 mAh/cm$^2$.

*Cell Preparation*

Electrodes were assembled in 2325-type coin cells with a lithium foil (99.9%, Sigma Aldrich) counter/reference electrode. Two layers of CELGARD 2300 separator (Celgard, Charlotte, NC, US) were used in each coin cell. 1M LiPF$_6$ in a solution of ethylene carbonate, diethyl carbonate and monofluoroethylene carbonate (volume ratio 3:6:1, all from BASF, Independence, OH, US) was used as the electrolyte. Cell assembly was carried out in an Ar-filled glove box.

*Cycling Performance Characteristics*

Cells were cycled galvanostatically at 30.0 ± 0.1°C between 0.005 V and 0.9 V using a SERIES 4000 Automated Test System (Maccor Inc., Tulsa, OK, US) at a C/10 rate for the first two cycles and a C/5 rate for the following cycles with a C/20 trickle discharge (lithiation). The initial coulombic efficiency (ICE) was defined as:

$$\text{first lithiation alloy capacity} / \text{first lithiation alloy capacity} \times 100\ \%$$

The fade rate was defined as:

$$[(\text{10th cycle capacity}) - (\text{50th cycle capacity})] / (\text{10th cycle capacity}) \times 100\ \%$$

***Electrochemical Alloy Stability Test***

A test was performed to evaluate the stability of the alloy structure during electrochemical cycling. Without being bound by theory, it is generally believed that structural instability results in the formation of $Li_{15}Si_4$ during cycling and that this results in capacity fade. In electrochemical cycling measurements in half-cells, $Li_{15}Si_4$ formation causes a peak to occur in the differential capacity at about 0.4 V during delithiation. The total delithiation capacity of the alloy between 0.38 V to 0.48 V divided by the total delithiation capacity as the cell is cycled between 5 mV and 0.9 V was used here as a measure of the fraction of $Li_{15}Si_4$ formed during cycling compared to the total amount of active Si. This fraction is referred to herein as the symbol 'r'. The maximum value of r (termed $r_{max}$) that is reached during cycling was used as a measure of the alloy structural stability during cycling. Smaller $r_{max}$ values are indicative of improved alloy structural instability and improved cycling performance. Here $r_{max}$ was measured as the maximum value of r measured during 50 charge/discharge cycles performed at 30°C with a C/10 cycling rate for the first two cycles and a C/5 rate for the following cycles with a C/20 trickle discharge (lithiation) step at the lower cutoff voltage. The value of $r_{max}$ measured according to this method is termed $r_{max,30}$. Cycling at higher temperatures causes the acceleration of structural instability. Therefore, the maximum value of r reached during 20 charge/discharge cycles performed at 45°C with a C/10 cycling rate for the first two cycles and a C/5 rate for the following cycles with a C/20 trickle discharge (lithiation) step at the lower cutoff voltage was also measured in some cases as an extreme test of structural stability. The value of $r_{max}$ measured according to this method is termed $r_{max,45}$.

**Results**

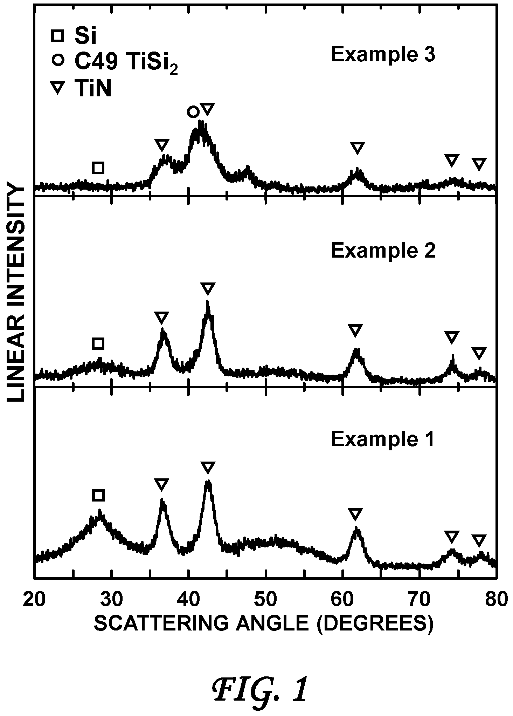

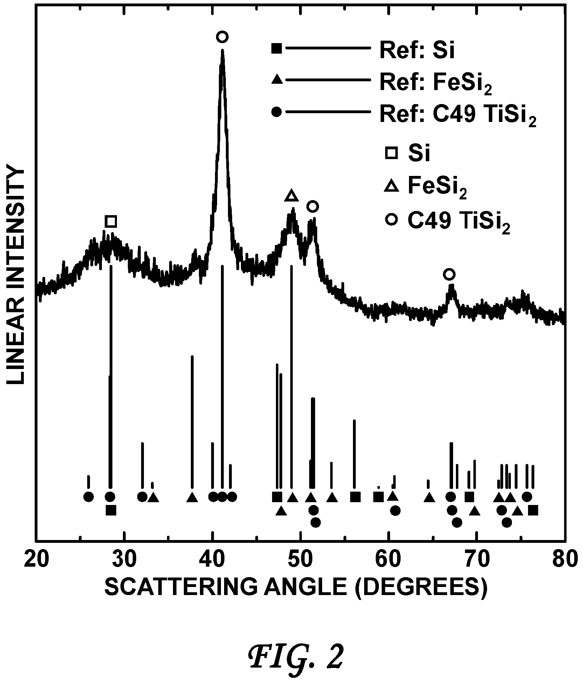

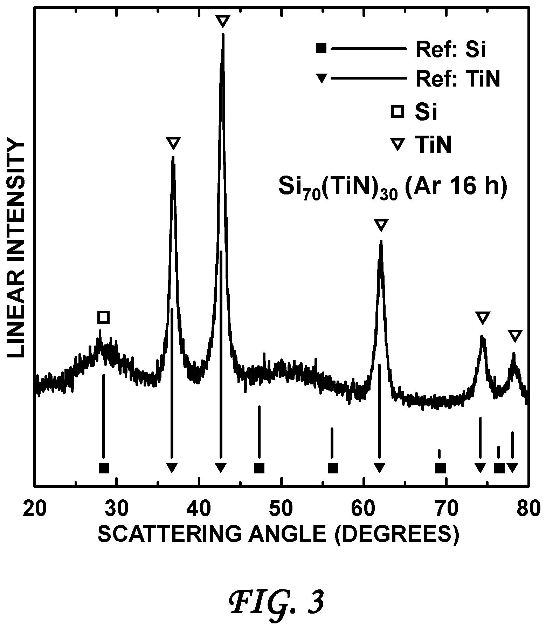

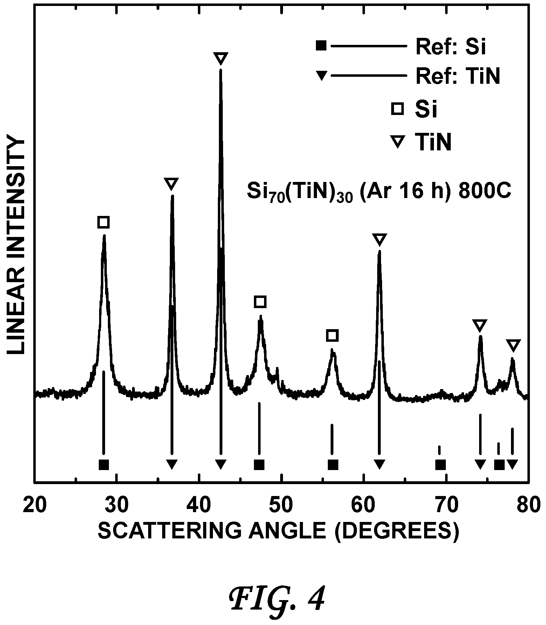

X-ray diffraction patterns for the alloys are provided in the Figures as follows: Figure 1 - Examples 1-3; Figure 2 - Example 5; Figure 3 - CE2; Figure 4 - CE4. Peaks in the diffraction pattern are identified by the open symbols, and relative diffraction intensities for reference patterns of identified phases are indicated by the black lines and labelled according to the solid symbols. All of Examples 1-4, 6-9 and Comparative Examples CE1-CE4 comprised a phase with a TiN structure, as determined by XRD. This phase may have been titanium nitride or titanium oxynitride with a general formula of $TiN_{1-x}O_x$, $0 \leq x < 1$. This phase is referred to herein as X or X-phase.

Table 2 lists the phases observed by XRD and the weight percentages of nitrogen and oxygen in Examples 1-9 and CE1-CE4 as determined by LECO testing. From this data, the final sample stoichiometry was determined and is also provided in Table 2.

LECO testing showed that Examples 1 and 2 contain nearly the same amount of nitrogen as titanium, demonstrating full reaction of the Ti in the sample to form TiN. Some $TiSi_2$ (C49) phase (where C49 is the Strukturbericht symbol of the $TiSi_2$ phase formed) was detected in Example 3 by XRD (Figure 1). Therefore, some of the titanium was in the form of a silicide in this sample while the rest of the titanium formed TiN. Some oxygen (6-8 at%) is present in all samples tested, presumably due to oxygen impurity in the precursors. These results suggest that Examples 1 and 2 comprise Si and TiN phases while Example 3 comprises $TiSi_2$ in addition to the Si and TiN phases. Examples 4 and 5 both contain a substantial amount of nitrogen; apparently, the addition of carbon or iron enhances nitrogen uptake. Since the atomic percentage of nitrogen exceeds that of titanium in Examples 4 and 5, the excess N is likely in the form of $Si_3N_4$. Example 4 exhibited no $Si_3N_4$ XRD peaks, so the $Si_3N_4$ is likely amorphous. XRD analysis showed that Example 5 (Figure 2) included an amorphous Si phase, a $TiSi_2$ (C49) phase having a grain size of 7 nm, and a $FeSi_2$ phase having a grain size of 3 nm; any nitrogen-containing phase present would therefore have been amorphous. The XRD pattern of Example 6 showed that the sample comprised an amorphous Si phase, a $TiSi_2$ (C49) phase and an X-phase. XRD analysis showed that Examples 7 and 8 both comprised an amorphous Si phase and an X-phase. This, combined with the LECO results, demonstrates that there is nearly full reaction of the Ti in the sample to form TiN in Example 7. Therefore, titanium silicides may be reacted by ball milling with nitrogen to form TiN and Si phases. The XRD patterns of Comparative Examples CE1-CE4 all showed that these samples included an Si phase and an X-phase.

**Table 2.** Composition of Si-Ti-N alloys

| Ex. | Phases Observed by XRD | N content (wt %) | O content (wt %) | Final Composition |
|-----|------------------------|------------------|------------------|-------------------|
| 1 | Si + X | 6.79 | 4.53 | $Si_{67}Ti_{12}N_{13}O_8$ |

(continued)

| Ex. | Phases Observed by XRD | N content (wt %) | O content (wt %) | Final Composition |
|---|---|---|---|---|
| 2 | Si+X | 10.4 | 3.17 | $Si_{51}Ti_{22}N_{22}O_6$ |
| 3 | Si + X + $TiSi_2$(C49) | 6.02 | 2.76 | $Si_{48}Ti_{32}N_{14}O_6$ |
| 4 | Si + X + $TiSi_2$(C49) | 20.2 | 4.4 | $Si_{38}Ti_4C_2N_{30}O_6$ |
| 5 | Si + $FeSi_2$ + $TiSi_2$(C49) | 6.44 | 4.24 | $Si_{44}Ti_5Fe_{26}N_{15}O_9$ |
| 6 | Si + X + $TiSi_2$(C49) | 20.5 | 11.4 | $Si_{42}Ti_8N_{33}O_{16}$ |
| 7 | Si + X | 10.4 | 3.26 | $Si_{48}Ti_{24}N_{21}O_6$ |
| 8 | Si + X | 6.52 | 2.05 | $Si_{45}Ti_{30}N_{21}O_4$ |
| 9 | Si+X | | | |
| CE1 | Si + X | 5.46 | 4.13 | $Si_{70}Ti_{12}N_{11}O_7$ |
| CE2 | Si + X | | | |
| CE3 | Si + X | | | |
| CE4 | Si + X | | | |

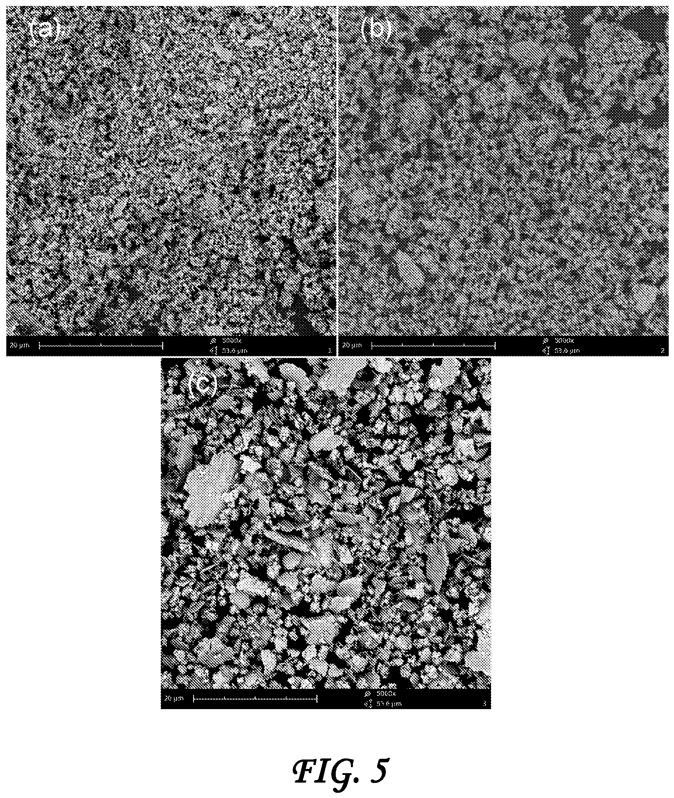

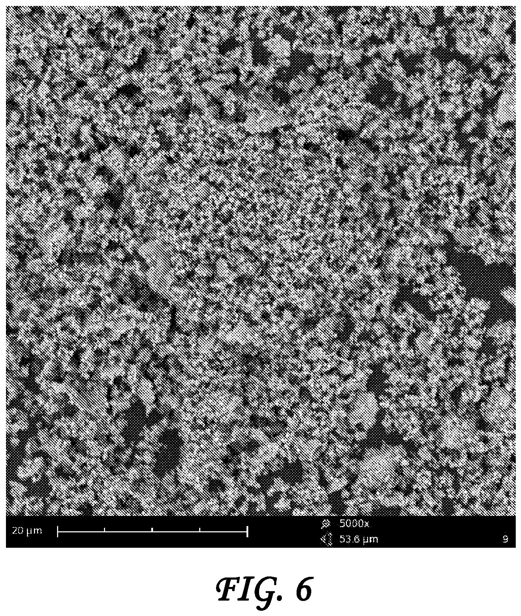

SEM images of the alloys are provided in the Figures as follows: Figure 5(a) - Example 1; Figure 5(b) - Example 2; Figure 5(c) - Example 3; and Figure 6 - CE1. It can be seen clearly in Figures 5(a)-(c) that as the Ti content is increased, the flake content and the average flake extent also significantly increases. Furthermore, as the flake content increases, the BET surface area decreases. This can be desirable, as a low surface area in the electrochemically active alloy may result in less electrolyte decomposition at the particle surface during battery operation. Although the characteristics of the flakes depended significantly on alloy composition, they did not depend strongly on the whether the alloy was synthesized by ball milling Si + Ti in $N_2$ gas or from ball milling Si + TiN in Ar gas. Thus the flake content and the average flake extent of Example 1 are nearly the same as those for CE1. However, it was found that it was only possible to obtain samples that contain a flake powder morphology and also have an X-phase grain size of less than 10 nm when samples were ball milled in a $N_2$ atmosphere.

Table 3 lists the Si grain size, X-phase grain size, average flake extent, percent flake content, BET surface area, and density of Examples 1-9 and Comparative Examples CE1-CE4. The grain size of the Si phase in Examples 1-8 was < 2 nm. The grain size of the X-phase in Examples 1-9 was less than 10 nm, with Example 2, 3, 6, 8 and 9 comprising X-phases with a grain size less than 5 nm. Examples 3, 5, and 8 had a BET surface area that was less than 10 $m^2$/g. In Example 8, the addition of Ti to $TiSi_2$ results in an alloy with a relatively low surface area. In electrochemical cells, a low surface area can be desirable because it may lead to reduce surface reactivity with electrolyte and a reduced reversible capacity. Therefore, the addition of Ti to $TiSi_2$ is a means of controlling surface area and capacity.

**Table 3.** Physical Properties of SiTiN Alloy Powders

| Ex. | Si grain size (nm) | X-phase grain size (nm) | avg. flake extent ($\mu$m) | flake content (%) | surface area ($m^2$/g) | density (g/ml) |
|---|---|---|---|---|---|---|
| 1 | <2 | 5.4 | 2 | 20 | 18.00 | 2.90 |
| 2 | <2 | 4.5 | 3 | 30 | 11.39 | 3.06 |
| 3 | <2 | 3.5 | 6 | 60 | 4.43 | 3.57 |
| 4 | <2 | 3.9 | 2 | 5 | 18.44 | 2.90 |
| 5 | <2 | 7 | | | 2.05 | 4.39 |
| 6 | <2 | 3.6 | 2 | 5 | 13.47 | 3.02 |
| 7 | <2 | 5.5 | 3 | 15 | 11.06 | 3.43 |
| 8 | <2 | 4.2 | 3 | 15 | 6.11 | 3.67 |
| 9 | 5.7 | 4.0 | | | | |
| CE1 | 2.1 | 11.3 | 3 | 20 | 14.65 | 2.88 |
| CE2 | <2 | 12.5 | | | | |

(continued)

| Ex. | Si grain size (nm) | X-phase grain size (nm) | avg. flake extent ($\mu$m) | flake content (%) | surface area ($m^2$/g) | density (g/ml) |
|---|---|---|---|---|---|---|
| CE3 | 9.7 | 15 | | | | |
| CE4 | 10.5 | 17 | | | | |

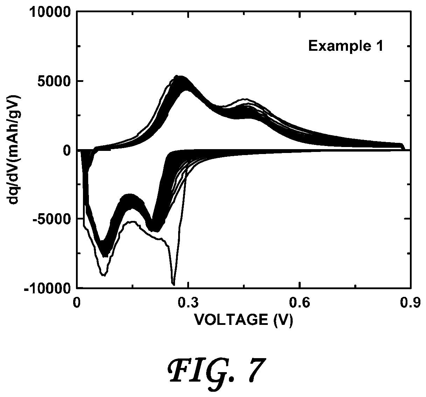

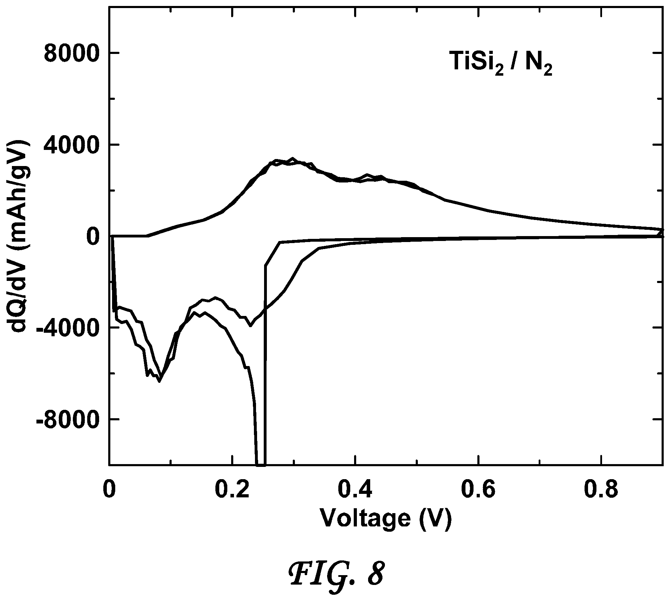

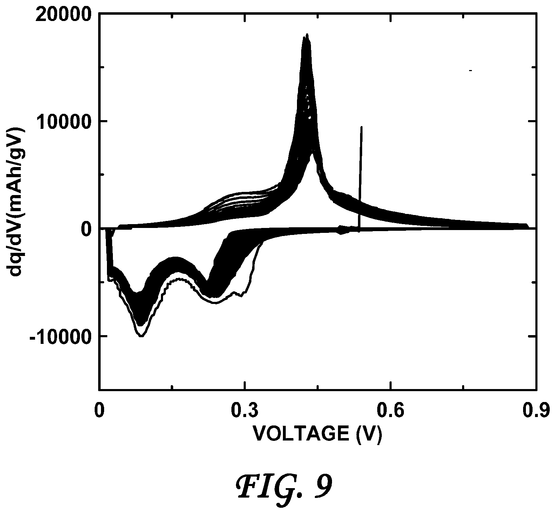

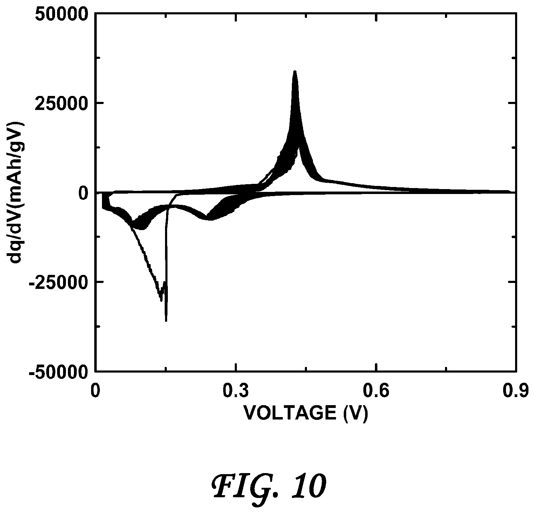

Plots of differential capacity vs. voltage for electrochemical cells cycled at 30°C are provided in the following Figures: Figure 7 - Example 1; Figure 8 - Example 7; Figure 9 - CE1; and Figure 10 - CE3. For Examples 1-9, no peak due to the formation of $Li_{15}Si_4$ was observed in the differential capacity curve during the 50 cycles tested. For Comparative Examples CE1-CE4, a large peak due to the formation of $Li_{15}Si_4$ was observed in the differential capacity curve at about 0.43 V during the 50 cycles tested.

Table 4 summarizes the electrochemical cycling performance characteristics of Examples 1-9 and CE1-CE4. Table 4 includes maximum values of the structural stability parameter, r, over 50 charge/discharge cycles at 30°C ($r_{max,30}$) and 45°C ($r_{max,45}$). All values of r for Examples 1-9 were well below 0.25 during cycling, reflecting structural stability of the alloys and the lack of $Li_{15}Si_4$ formation. Even during cycling at the elevated temperature of 45°C, the structural stability parameter, r, for Examples 1 and 2, remained below 0.25. In contrast, Comparative Examples CE1-CE4 all reached r values of at least 0.27 during cycling at both 30°C and 45°C; in particular, CE1, CE3, and CE4 demonstrated $r_{max}$ values of close to or greater than 0.6.

**Table 4.** Electrochemical properties of Li half-cells prepared using SiTiN alloys

| Ex. | ICE | Reversible capacity (mAh/g) | Reversible capacity (Ah/L) | Cycle 10-50 Fade | $r_{max,30}$ | $r_{max,45}$ |
|---|---|---|---|---|---|---|
| 1 | 81% | 1738 | 1872 | 22% | 0.214 | 0.228 |
| 2 | 77% | 1132 | 1601 | 10% | 0.202 | 0.206 |
| 3 | 78% | 712 | 1370 | 3% | 0.187 | |
| 4 | 86% | 2289 | 2055 | 12% | 0.214 | |
| 5 | 76% | 1476 | 2041 | 1% | 0.195 | |
| 6 | 82% | 1137 | 1594 | 14% | 0.205 | |
| 7 | 84% | 1232 | 1747 | 5% | 0.206 | |
| 8 | 90% | 1037 | 1672 | 1% | 0.193 | |
| 9 | 78% | 1025 | 1591 | 15% | 0.234 | |
| CE1 | 83% | 1772 | 1881 | 25% | 0.607 | 0.644 |
| CE2 | 87% | 1472 | 1836 | 23% | 0.271 | 0.394 |
| CE3 | 87% | 1918 | 1935 | 14% | 0.692 | |
| CE4 | 87% | 1182 | 1695 | 8% | 0.598 | |

Various modifications and alterations to this disclosure will become apparent to those skilled in the art. It should be understood that this disclosure is not intended to be unduly limited by the illustrative embodiments and examples set forth herein and that such examples and embodiments are presented by way of example only with the scope of the disclosure intended to be limited only by the claims set forth herein as follows.

**Claims**

1. An electrochemically active material comprising an alloy represented by general formula (I):

$$Si_aTi_bO_cN_dM_e, \qquad (I)$$

where a, b, c, d, and e represent atomic % values, a + b + c + d + e = 100, M comprises carbon or a transition metal element other than titanium, a > 40, a + b + e ≥ c + d, c ≥ 0, d > 5, e ≥ 0, and a/b > 0.5;
wherein the alloy comprises a transition metal silicide, titanium nitride, or titanium oxynitride phase, and the phase has a Scherrer grain size that is greater than 2 nm and less than 10 nm.

2. The electrochemically active material of claim 1, wherein M comprises V, Cr, Mn, Fe, Co, Ni or Cu and/or wherein M comprises carbon.

3. The electrochemically active material according to claim 1 or claim 2, wherein c is greater than 0, preferably between 1 and 20.

4. The electrochemically active material according to claim 1, wherein the alloy comprises a transition metal silicide phase.

5. The electrochemically active material according to claim 1, wherein
the alloy comprises a phase having x-ray diffraction peaks characteristic of a titanium nitride phase or titanium nitride-like phase in which the largest x-ray diffraction peak associated with the titanium nitride phase or titanium nitride-like phase has a full width at half maximum, as measured using Cu-k$\alpha_1$ radiation greater than 0.9° 2-theta and less than 4° 2-theta,
and/or

wherein the alloy comprises an elemental silicon phase having a Scherrer grain size that is less than or equal to 60 nanometers,
and/or
wherein each of the phases of the alloy include one or more grains, and wherein the x-ray diffraction pattern of the alloy comprises no detectible Cu-K$\alpha_1$ diffraction peaks whose FWHM correspond to a grain size greater than 60 nm, according to the Scherrer equation,
and/or
wherein each of the phases of the alloy include one or more grains, and wherein the x-ray diffraction pattern of the alloy comprises no detectible Cu-K$\alpha_1$ diffraction peaks associated with elemental silicon whose FWHM correspond to a grain size greater than 2 nm, according to the Scherrer equation.

6. The electrochemically active material according to claim 1, wherein the alloy is in the form of particles comprising a flake morphology and/or wherein the alloy is in the form of a powder having a surface area less than 10 m$^2$/g.

7. An electrode composition comprising:

the electrochemically active material according to any one of the preceding claims; and
a binder,

the electrode composition optionally further comprises graphite.

8. A negative electrode comprising:

the electrode composition according to claim 7; and
a current collector.

9. An electrochemical cell comprising:

the negative electrode of claim 8;
a positive electrode comprising a positive electrode composition comprising lithium; and
an electrolyte comprising lithium.

10. An electronic device comprising the electrochemical cell according to claim 9.

11. A method of making an electrochemical cell, the method comprising:

providing a positive electrode comprising a positive electrode composition comprising lithium;

providing a negative electrode according to claim 8;
providing an electrolyte comprising lithium; and
incorporating the positive electrode, negative electrode, and the electrolyte into an electrochemical cell.

12. A method of making an electrochemically active material according to any of claims 1 to 6, the method comprising:

ball milling a powder comprising silicon and titanium,
wherein the step of ball milling is carried out in an atmosphere comprising nitrogen, a mixture of nitrogen and oxygen, or air.

13. The method of claim 12, wherein the powder comprises an intermetallic compound comprising silicon and titanium, which intermetallic compound optionally comprises $TiSi_2$.

**Patentansprüche**

1. Elektrochemisch aktives Material, umfassend eine Legierung, die durch die allgemeine Formel (I) dargestellt wird:

$$Si_aTi_bO_cN_dM_e, \qquad (I)$$

wobei a, b, c, d und e Atom-%-Werte darstellen, a + b + c + d + e = 100, M Kohlenstoff oder ein anderes Übergangsmetallelement als Titan umfasst, a > 40, a + b + e $\geq$ c + d, c $\geq$ 0, d > 5, e $\geq$ 0, und a/b > 0,5 ist, wobei die Legierung eine Übergangsmetallsilicid-, Titannitrid- oder Titanoxynitrid-Phase umfasst und die Phase eine Scherrer-Korngröße von mehr als 2 nm und weniger als 10 nm aufweist.

2. Elektrochemisch aktives Material nach Anspruch 1, wobei M V, Cr, Mn, Fe, Co, Ni oder Cu umfasst und/oder wobei M Kohlenstoff umfasst.

3. Elektrochemisch aktives Material nach Anspruch 1 oder Anspruch 2, wobei c größer als 0, vorzugsweise zwischen 1 und 20 ist.

4. Elektrochemisch aktives Material nach Anspruch 1, wobei die Legierung eine Übergangsmetallsilicidphase umfasst.

5. Elektrochemisch aktives Material nach Anspruch 1,

wobei die Legierung eine Phase mit Röntgenbeugungspeaks, die für eine Titannitrid-Phase oder eine Titannitrid-ähnliche Phase charakteristisch sind, umfasst, bei der der größte Röntgenbeugungspeak, der mit der Titannitrid-Phase oder der Titannitrid-ähnlichen Phase assoziiert ist, beim halben Maximum eine volle Breite aufweist, so wie es unter Verwendung von Cu-k$\alpha_1$-Strahlung, die größer als 0,9° 2-Theta und weniger als 4° 2-Theta ist, gemessen wird
und/oder
wobei die Legierung eine elementare Siliziumphase mit einer Scherrer-Korngröße von weniger als oder gleich 60 Nanometern umfasst,
und/oder
wobei jede der Phasen der Legierung ein oder mehrere Körner einschließt und wobei das Röntgenbeugungsmuster der Legierung keine nachweisbaren Cu-k$\alpha_1$-Beugungspeaks, deren FWHM bzw. Halbwertsbreite einer Korngröße von mehr als 60 nm entspricht, gemäß der Scherrer-Gleichung, umfasst,
und/oder
wobei jede der Phasen der Legierung ein oder mehrere Körner einschließt und wobei das Röntgenbeugungsmuster der Legierung keine nachweisbaren Cu-k$\alpha_1$-Beugungspeaks, die mit elementarem Silizium assoziiert sind, umfasst, deren FWHM gemäß der Scherrer-Gleichung einer Korngröße von mehr als 2 nm entspricht.

6. Elektrochemisch aktives Material nach Anspruch 1, wobei die Legierung in Form von Teilchen mit einer Flocken- bzw. Schuppenmorphologie vorliegt und/oder wobei die Legierung in Form eines Pulvers mit einer Oberfläche von weniger als 10 m$^2$/g vorliegt.

7. Elektrodenzusammensetzung umfassend:

   das elektrochemisch aktive Material nach einem der vorangehenden Ansprüche; und
   ein Bindemittel,

   wobei die Elektrodenzusammensetzung optional ferner Graphit umfasst

8. Negative Elektrode umfassend:

   die Elektrodenzusammensetzung nach Anspruch 7; und
   einen Stromabnehmer.

9. Elektrochemische Zelle umfassend:

   die negative Elektrode nach Anspruch 8;
   eine positive Elektrode, die eine Lithium-enthaltende positive Elektrodenzusammensetzung umfasst; und
   einen Lithium-enthaltenden Elektrolyten.

10. Elektronisches Gerät, das die elektrochemische Zelle nach Anspruch 9 umfasst.

11. Verfahren zur Herstellung einer elektrochemischen Zelle, wobei das Verfahren umfasst:

   Bereitstellen einer positiven Elektrode, die eine Lithium-enthaltende positive Elektrodenzusammensetzung umfasst;
   Bereitstellen einer negativen Elektrode nach Anspruch 8;
   Bereitstellen eines Lithium-enthaltenden Elektrolyten; und
   Einbauen der positiven Elektrode, der negativen Elektrode und des Elektrolyten in eine elektrochemische Zelle.

12. Verfahren zur Herstellung eines elektrochemisch aktiven Materials nach einem der Ansprüche 1 bis 6, wobei das Verfahren umfasst:

   Kugelmahlen eines Silizium- und Titan-enthaltenden Pulvers,
   wobei der Schritt des Kugelmahlens in einer Atmosphäre, die Stickstoff, eine Mischung aus Stickstoff und Sauerstoff oder Luft umfasst, durchgeführt wird.

13. Verfahren nach Anspruch 12, wobei das Pulver eine intermetallische Verbindung, die Silizium und Titan enthält, umfasst, wobei die intermetallische Verbindung optional $TiSi_2$ umfasst.

**Revendications**

1. Matériau électrochimiquement actif comprenant un alliage représenté par la formule générale (I) :

$$Si_aTi_bO_cN_dM_e, \qquad (I)$$

   où a, b, c, d et e représentent des valeurs en pourcentage atomique, a + b + c + d + e = 100, M comprend du carbone ou un métal de transition autre que le titane, a > 40, a + b + e ≥ c + d, c ≥ 0, d > 5, e ≥ 0, et a/b > 0,5 ; dans lequel l'alliage comprend une phase de siliciure de métal de transition, de nitrure de titane ou d'oxynitrure de titane, et la phase a une taille de grain de Scherrer supérieure à 2 nm et inférieure à 10 nm.

2. Matériau électrochimiquement actif selon la revendication 1, dans lequel M comprend V, Cr, Mn, Fe, Co, Ni ou Cu et/ou dans lequel M comprend du carbone.

3. Matériau électrochimiquement actif selon la revendication 1 ou la revendication 2, dans lequel c est plus grand que 0, de préférence entre 1 et 20.

4. Matériau électrochimiquement actif selon la revendication 1, dans lequel l'alliage comprend une phase de siliciure de métal de transition.

5. Matériau électrochimiquement actif selon la revendication 1, dans lequel
l'alliage comprend une phase ayant des pics de diffraction des rayons X caractéristiques d'une phase de nitrure de titane ou d'une phase de type nitrure de titane dans laquelle le pic de diffraction des rayons X le plus grand associé à la phase de nitrure de titane ou à la phase de type nitrure de titane a une largeur à mi-hauteur, mesurée en utilisant une radiation Cu-K$\alpha_1$, supérieure à 0,9° 2-thêta et inférieure à 4° 2-thêta,
et/ou

dans lequel l'alliage comprend une phase de silicium élémentaire ayant une taille de grain de Scherrer inférieure ou égale à 60 nanomètres,
et/ou
dans lequel chacune des phases de l'alliage comprend un ou plusieurs grains, et dans lequel le motif de diffraction des rayons X de l'alliage ne comprend aucun pic de diffraction Cu-K$\alpha_1$ détectable dont la FWHM correspond à une taille de grain supérieure à 60 nm, selon l'équation de Scherrer,
et/ou
dans lequel chacune des phases de l'alliage comprend un ou plusieurs grains, et dans lequel le motif de diffraction des rayons X de l'alliage ne comprend aucun pic de diffraction Cu-K$\alpha_1$ détectable associé au silicium élémentaire dont la FWHM correspond à une taille de grain supérieure à 2 nm, selon l'équation de Scherrer.

6. Matériau électrochimiquement actif selon la revendication 1, dans lequel l'alliage se présente sous la forme de particules comprenant une morphologie en flocons et/ou dans lequel l'alliage se présente sous la forme d'une poudre ayant une surface spécifique inférieure à 10 m$^2$/g.

7. Composition d'électrode comprenant :

le matériau électrochimiquement actif selon l'une quelconque des revendications précédentes ;
et
un liant,

la composition d'électrode comprenant optionnellement en outre du graphite.

8. Électrode négative comprenant :

la composition d'électrode selon la revendication 7 ; et
un collecteur de courant.

9. Cellule électrochimique comprenant :

l'électrode négative selon la revendication 8 ;
une électrode positive comprenant une composition d'électrode positive comprenant du lithium ; et
un électrolyte comprenant du lithium.

10. Dispositif électronique comprenant la cellule électrochimique selon la revendication 9.

11. Procédé de fabrication d'une cellule électrochimique, le procédé comprenant :

la fourniture d'une électrode positive comprenant une composition d'électrode positive comprenant du lithium ;
la fourniture d'une électrode négative selon la revendication 8 ;
la fourniture d'un électrolyte comprenant du lithium ; et
l'incorporation de l'électrode positive, de l'électrode négative et de l'électrolyte dans une cellule électrochimique.

12. Procédé de fabrication d'un matériau électrochimiquement actif selon l'une quelconque des revendications 1 à 6, le procédé comprenant :

le broyage à billes d'une poudre comprenant du silicium et du titane,
dans lequel l'étape de broyage à billes est réalisée dans une atmosphère comprenant de l'azote, un mélange d'azote et d'oxygène, ou de l'air.

13. Procédé selon la revendication 12, dans lequel la poudre comprend un composé intermétallique comprenant du silicium et du titane, dans lequel le composé intermétallique comprend optionnellement du $TiSi_2$.

*FIG. 1*

*FIG. 2*

FIG. 3

*FIG. 4*

*FIG. 5*

*FIG. 6*

FIG. 7

*FIG. 8*

*FIG. 9*

*FIG. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080206641, Christensen
- US 6680145 B, Obrovac

**Non-patent literature cited in the description**

- **IL-SEOK KIM ; P. N. KUMTA ; G. E. BLOMGREN**. *Electrochem. Solid State Lett.*, 2000, vol. 3, 493
- **YE ZHANG ; ZHENG-WEN FU ; QI-ZONG QIN**. *Electrochem. Comm.*, 2004, vol. 6, 484